Europäisches Patentamt

European Patent Office

Office européen des brevets

(11) Publication number: **0 392 739**
**A2**

# EUROPEAN PATENT APPLICATION

(21) Application number: **90303650.7**

(22) Date of filing: **05.04.90**

(51) Int. Cl.<sup>5</sup>: **H02K 5/167**

(30) Priority: **08.04.89 GB 8907963**

(43) Date of publication of application:
**17.10.90 Bulletin 90/42**

(84) Designated Contracting States:
**DE FR GB IT NL**

(71) Applicant: **Smiths Industries Public Limited Company**
**765, Finchley Road**
**London, NW11 8DS(GB)**

(72) Inventor: **Thomas, Andrew Ashleigh**
**95, Farmers Close**
**Witney, Oxfordshire, OX8 6NR(GB)**
Inventor: **Doland, David John**
**54, Ducklington Lane**
**Witney, Oxfordshire, OX8 7JB(GB)**

(74) Representative: **Flint, Jonathan McNeill**
**SMITHS INDUSTRIES PUBLIC LIMITED**
**COMPANY 765 Finchley Road**
**London NW11 8DS(GB)**

(54) **Motor bearing assemblies.**

(57) A sleeve bearing assembly for opposite ends of a vertical motor each have a lubricant reservoir (16) formed by a high temperature resistant lubricant absorbed into a felt pad. An oil seal (40, 50) of a high temperature resistant rubber is located below each bearing within an annular wall (15) that extends axially of the motor shaft (2). Wings (41 to 44) on the oil seal project into grooves (31 to 34) in the wall to prevent rotation of the seal. Each seal has an annular nib (46 and 47, 51 and 52) at each end that engage the shaft, forming a rotational seal which impedes downward flow of lubricant along the shaft. A groove (48, 53, 54) extends coaxially around one or both of the nibs to increase its flexibility.

Fig. 1.

## MOTOR BEARING ASSEMBLIES

This invention relates to motor bearing assemblies of the kind including a sleeve bearing embracing the motor shaft that is in use inclined from the horizontal, a lubricant reservoir arranged to supply lubricant to the sleeve bearing, the lubricant reservoir containing a high temperature resistant lubricant absorbed into a fibre member, and an annular member extending axially of the motor shaft.

The invention is more particularly concerned with bearing assemblies for electric motors which are capable of operating at high temperature with their shaft inclined from the horizontal.

Motor bearings generally take one of two different forms. They can either include a race of ball bearings or a sleeve bearing. Ball bearings can be capable of operating at high temperature but have the disadvantages of being relatively expensive and can be noisy, especially after wear has occurred. Sleeve bearings have the advantages of being relatively inexpensive and quiet but have not until now been suitable for operation at high temperatures. This is because the high temperatures can damage the lubricant by oxidation or evaporation, and can lower its viscosity leading to an increased risk of leakage thereby reducing the operating life of the bearing. The problem of leakage is aggravated where the motor shaft is vertical or otherwise inclined from the horizontal.

It is an object of the present invention to provide a sleeve bearing that is capable of operating at high temperature and at orientations inclined from the horizontal.

According to the present invention there is provided a motor bearing assembly of the above-specified kind, characterised in that the assembly includes a resilient generally cylindrical member the outer surface of which is sealed and retained with the annular member and the inner surface of which makes a rotational seal with the shaft below the sleeve bearing such as to impede flow of lubricant downwardly along the shaft.

The rotational seal is preferably provided by two annular surface formations on the resilient member that engage the shaft at locations spaced along the shaft. The resilient member may have an annular groove extending coaxially around at least one of the annular surface formations so as to increase its flexibility. The annular member may have a recess, the resilient member having a projection that extends in the recess to prevent rotation of the resilient member relative to the annular member. The sleeve bearing is preferably located below the rotor of the motor, the resilient member being located below the sleeve bearing. The assembly may include a second sleeve bearing located above the rotor, a second resilient member located between the second sleeve bearing and the rotor, and the second resilient member making a rotational seal with the shaft. The resilient member may be of a high temperature resistant rubber.

A motor with a bearing according to the present invention, will now be described, by way of example, with reference to the accompanying drawings, in which:

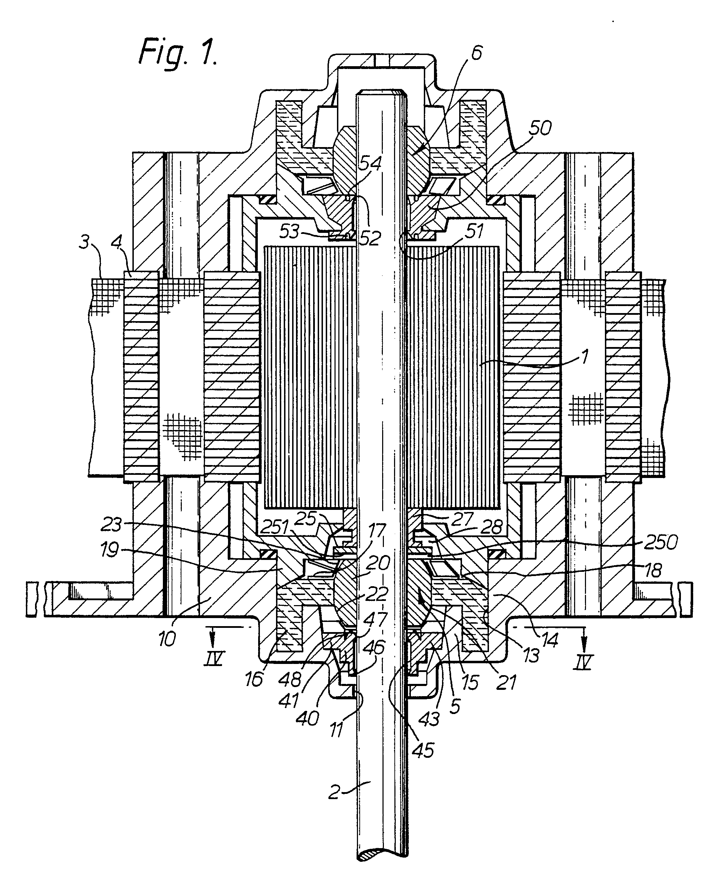

Figure 1 is a cross-sectional elevation of the motor;

Figure 2 is view of the underside of a part of the bearing;

Figure 3 is a sectional elevation view of another part of the bearing to an enlarged scale; and

Figure 4 is a transverse section of the bearing along the line IV - IV of Figure 1.

The motor comprises a rotor 1 mounted on a vertical shaft 2 and rotatable within stator coils 3 wound on laminations 4. The shaft 2 is supported at its lower and upper ends by respective sleeve bearings 5 and 6.

The bearing 5 is contained within a bearing housing 10 machined or cast from a metal such as an aluminium alloy. The housing 10 has a central aperture 11, through which the shaft 2 extends. An annular cavity 13 is formed within the housing 10, concentric with the shaft 2, between an outer circular wall 14 and an inner annular wall 15. The cavity 13 contains a part of a lubricant reservoir 16 which is formed by a wad of felt or similar fibres, saturated with a high temperature resistant oil. The reservoir 16 extends over the upper end of the annular wall 15.

Rotatably mounted on the shaft 2 is a conventional sleeve bearing member 20 within which the shaft rotates. The bearing member 20 is of a sintered metal and is of a generally barrel shape with a convex outer surface 21. The outer surface 21 of the bearing member 20 is contacted centrally by the lubricant reservoir 16 and is supported at its lower end by a tapered, frusto-concial bearing seating 22 formed around the inner edge of the annular wall 15. The upper end of the bearing member 20 is supported by a retaining plate 17 with a central tapered collar 23 that embraces the bearing member. The retaining plate 17 also supports the upper end of the felt reservoir 16, the external diameter of the retaining plate being slightly smaller than that of the cavity 13 so that an annular passage 18 is formed into the reservoir around the retaining plate. A sealing plate 19 extends across the upper end of the cavity 13 and holds the retaining plate 17 in position.

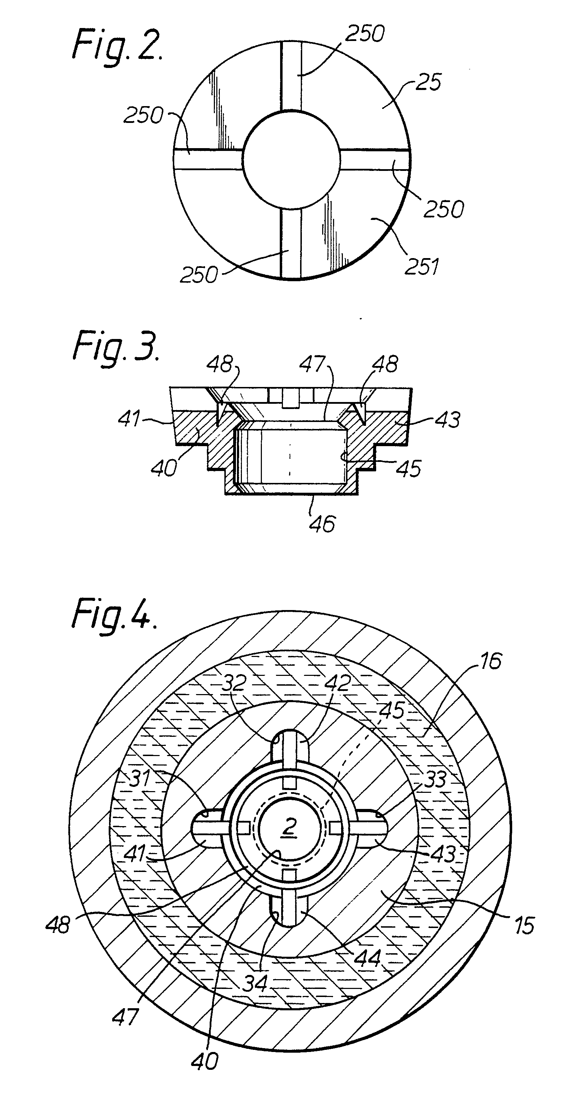

The bearing member 20 is spaced from the rotor 1 by a radially extending member in the form of a circular washer 25 that abuts the bearing member. The washer 25 may be of polytetrafluroethylene and may have radial grooves 250 formed in one surface 251, as shown in Figure 2. The grooved surface 251 is on the lower side, adjacent the bearing member 20. The grooves 250 enable oil flow over the surface of the washer 25 and hence improve lubrication where the washer rubs against the bearing on rotation. Interposed between the washer 25 and the rotor 1 is a cylindrical spacing sleeve 27 which may be of metal or a high temperture resistant plastics material. The washer 25 is located within a cavity 28, formed between the sealing plate 19 and the reservoir 16, that communicates with the passage 18 to the reservoir.

Below the bearing member 20 there is located an oil seal 40 moulded from Viton (Shore hardness 54) or a similar high temperature resistant rubber or other resilient material. With reference also to Figures 3 and 4, the seal 40 is of generally cylindrical shape having four radially outwardly projecting wings 41 to 44 which are shaped to fit within respective channels 31 to 34 formed around the inside of the wall 15 and thereby prevent rotation of the seal 40 relative to the housing 10. Extending through the seal 40 is an axial bore 45 which is slightly larger in diameter than the shaft 2. At opposite ends of the bore 45, an annular nib 46 and 47 projects inwardly and contacts the surface of the shaft 2 with a sharp edge which provides two low-friction rotation seals with the shaft to prevent oil flow down the shaft past the seal. The wall thickness of the seal 40 around the lower nib 6 is reduced; relative to the upper part of the seal, so as to make this part of the seal more flexible and thereby reduce frictional resistance to rotation of the shaft. A similar effect is achieved at the upper nib 47 by providing an annular, tapering groove 48 around the nib which reduces the thickness of material supporting the nib and thereby renders it more flexible. The external surface of the seal 40 prevents flow of oil down the inside of the wall 15; the nibs 47 and 46 prevent oil flowing out of the motor down the shaft 2.

A similar oil seal 50 is located below the upper bearing 6 to prevent flow of oil downwardly from the bearing. The oil seal 50 has two annular nibs 51 and 52 provided at the lower and upper ends of the seal. An annular groove 53 and 54 is provided around each nib 51 and 52 at opposite end faces of the seal. The grooves 53 and 54 are rectangular in section with rounded floors but serve the same purpose as the groove 48 in the lower seal, to increase the flexibility of the nibs 51 and 52 and thereby reduce the rotational friction of the shaft.

The motor is not confined to use horizontally but could be used at any inclination from the vertical.

## Claims

1. A motor bearing assembly including a sleeve bearing embracing the motor shaft that is in use inclined from the horizontal, a lubricant reservoir arranged to supply lubricant to the sleeve bearing, the lubricant reservoir containing a high temperature resistant lubricant absorbed into a fibre member, and an annular member extending axially of the motor shaft, characterised in that the assembly includes a resilient generally cylindrical member (40, 50) the outer surface of which is sealed and retained with the annular member (15) and the inner surface (46, 47, 51, 52) of which makes a rotational seal with the shaft (2) below the sleeve bearing (5, 6) such as to impede flow of lubricant downwardly along the shaft.

2. A motor bearing assembly according to Claim 1, characterised in that the rotational seal is provided by two annular surface formations (46 and 47, 51 and 52) on the resilient member (40, 50) that engage the shaft (2) at locations spaced along the shaft.

3. A motor bearing assembly according to Claim 2, characterised in that the resilient member (40, 50) has an annular groove (48, 53, 54) extending coaxially around at least one of the annular surface formations (47, 51, 52) so as to increase its flexibility.

4. A motor bearing assembly according to any one of the preceding claims, characterised in that the annular member (15) has a recess (31 to 34), and that the resilient member (40, 50) has a projection (41 to 44) that extends in the recess to prevent rotation of the resilient member (40, 50) relative to the annular member (15).

5. A motor bearing assembly according to any one of the preceding claims, characterised in that sleeve bearing (5) is located below the rotor (1) of the motor, and that the resilient member (40) is located below the sleeve bearing.

6. A motor bearing assembly according to Claim 5, characterised in that the assembly includes a second sleeve bearing (6) located above the rotor (1), that a second resilient member (50) is located between the second sleeve bearing (6) and the rotor, and that the second resilient member makes a rotational seal with the shaft (2).

7. A motor bearing assembly according to any one of the preceding claims, characterised in that the resilient member (40, 50) is of a high temperature resistant rubber.

# Fig. 1.

Fig. 2.

Fig. 3.

Fig. 4.